## Europäisches Patentamt
## European Patent Office
## Office européen des brevets

(11) Publication number: **0 166 198**
**B1**

(12) **EUROPEAN PATENT SPECIFICATION**

(45) Date of publication of patent specification: **18.07.90**

(51) Int. Cl.⁵: **H 04 M 1/03**

(21) Application number: **85106233.1**

(22) Date of filing: **21.05.85**

(54) **Telephone handset.**

(30) Priority: **29.06.84 US 626010**

(43) Date of publication of application:
**02.01.86 Bulletin 86/01**

(45) Publication of the grant of the patent:
**18.07.90 Bulletin 90/29**

(84) Designated Contracting States:
**BE DE FR GB**

(56) References cited:
**WO-A-82/01632**
**DE-B-1 214 735**
**DE-B-2 063 279**
**FR-A-1 372 895**
**FR-A-2 490 903**
**GB-A-1 363 315**

(73) Proprietor: **WANG LABORATORIES INC.**
**One Industrial Avenue**
**Lowell, MA 01851 (US)**

(72) Inventor: **Gulezian, Haig Aram**
**1 Robinhood Road**
**Windham New Hampshire 03087 (US)**
Inventor: **Hargrave, Russell William**
**15 Strout Avenue**
**Wilmington Massachusetts 01887 (US)**
Inventor: **Magro, William Edward**
**16 Jefferson Road**
**Methuen Massachusetts 01844 (US)**

(74) Representative: **Behrens, Dieter, Dr.-Ing. et al**
**Wuesthoff & Wuesthoff Patent- und**
**Rechtsanwälte Schweigerstrasse 2**
**D-8000 München 90 (DE)**

Courier Press, Leamington Spa, England.

## Description

This invention relates to an ergonomically designed telephone handset which additionally provides improved acoustic coupling of the handset speaker to the user's ear and improved manufacturability.

One such example of a telephone handset which achieved improved manufacturability is enclosed in German Auslegeschrift 2 063 279, wherein the speaker and microphone elements were permanently fastened to identically constructed speaker and microphone caps, which simplified the production and assembly of telephone handsets. A further example is disclosed in PCT International Application WO 82/01632, a telephone handset having an extreme resistance to bending strains exerted upon the handset by use of an intermediate locking plate within its constructions.

Telephone handsets typically include microphone and speaker portions at each end of a handle portion, the speaker portion is generally a bulb having a concavity therein which fits over the ear. An electromagnetic speaker fits in the speaker bulb and an electromagnetic microphone fits in the microphone portion. Both are connected through a connector to the telephone set. Since telephone handsets are produced in such large volume, it is important that they be designed for ease of assembly at low costs without degrading the quality of the units. However, the telephone handsets presently in use are complex in design and expensive to assemble. Various clips, fasteners, and adhesives must be used to correctly position and hold to microphone and speaker components in proper operating position within the handset housing.

The invention as claimed is intended to remedy these drawbacks.

It solves the problem of how to design a telephone handset which can be assembled easily and inexpensively, while maintaining quality. The advantages offered by the invention are mainly that the handset components and housing can be properly assembled without separate fasteners or adhesives.

In accordance with certain principles of this invention, to ease assembly of the telephone handset, a microphone and a connector are first interference and snap fit onto a holder. The connector is placed in electrical communication with the microphone on the holder and a separate speaker through electrical leads. The speaker and holder are then positioned in a base section of the telephone handset without adhesive or separate fastener. A top section is then fastened over the base section to enclose the speaker, microphone and connector.

To acoustically isolate the speaker portion from the microphone portion, baffles are provided across the hollow of the handle portion. The speaker is firmly seated with a gasket between the speaker element and the interior of the speaker portion. An acoustically transparent fabric spans the opening in the gasket.

The foregoing and other objects, features and advantages of the invention will be apparent from the following more particular description of a preferred embodiment of the invention, as illustrated in the accompanying drawings in which like reference characters refer to the same parts throughout the different views. The drawings are not necessarily to scale, emphasis instead being placed upon illustrating the principles of the invention.

Fig. 1 is a perspective view from the top of a telephone handset embodying the present invention;

Fig. 2 is a perspective view of the base of the telephone handset of Fig. 1;

Fig. 3 is a longitudinal cross sectional view of the handset of Figs. 1 and 2;

Fig. 4 is a plan view of the interior of the top section of the telephone handset housing;

Fig. 5 is a longitudinal sectional view of the top section of the housing shown in Fig. 4;

Fig. 6 is a longitudinal sectional view of the base section of the telephone handset;

Fig. 7 is a plan view of the base section of Fig. 6;

Fig. 8 is a longitudinal sectional view of a microphone/connector holder in the handset of Fig. 3, enlarged;

Fig. 9 is a plan view of the holder of Fig. 8;

Fig. 10 is a plan view similar to Fig. 9 but with the connector positioned on the holder.

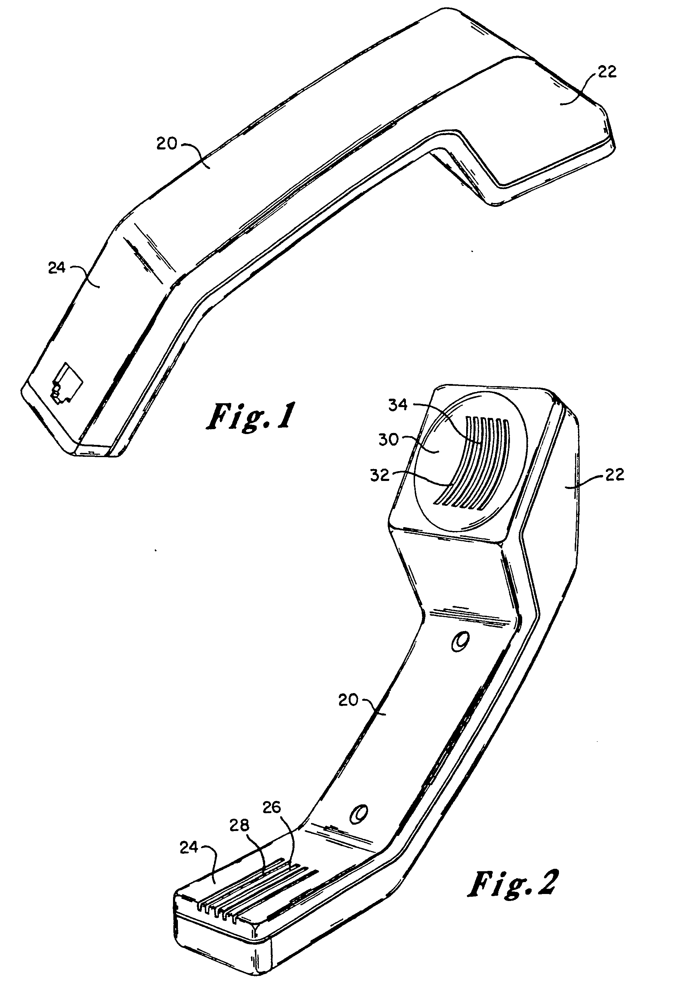

A telephone handset embodying principles of the present invention is shown in Figs. 1, 2 and 3. It includes the typical handle portion 20 between a speaker portion 22 and a microphone portion 24. The handle portion and the microphone portion have the same rectangular cross section. The microphone portion includes a microphone cavity 26 across which ribs 28 extend. The ribs 28 extend beyond the cavity 26 to the end of the microphone portion to add to the aesthetic quality of the handset and further to form grooves which facilitate cleaning of the spaces between the ribs.

The speaker portion is enlarged to provide a concave depression 30 which fits over the user's ear. A speaker cavity 32 is provided in the depression 30 and it is spanned by ribs 34 similar to the ribs 28 of the microphone. The ribs extend beyond the cavity 32 to give the appearance that the speaker is centered in the depression 30.

The dimensions and relative angles of the three portions of the handset have been ergonomically determined to satisfy 98% of the adult male population and 98% of the adult female population. This large user population is facilitated by the common cross section of the handle and microphone portions. A given length handle portion is comfortable with larger hands because there is no interference from the large bowl which surrounds the conventional microphone portion.

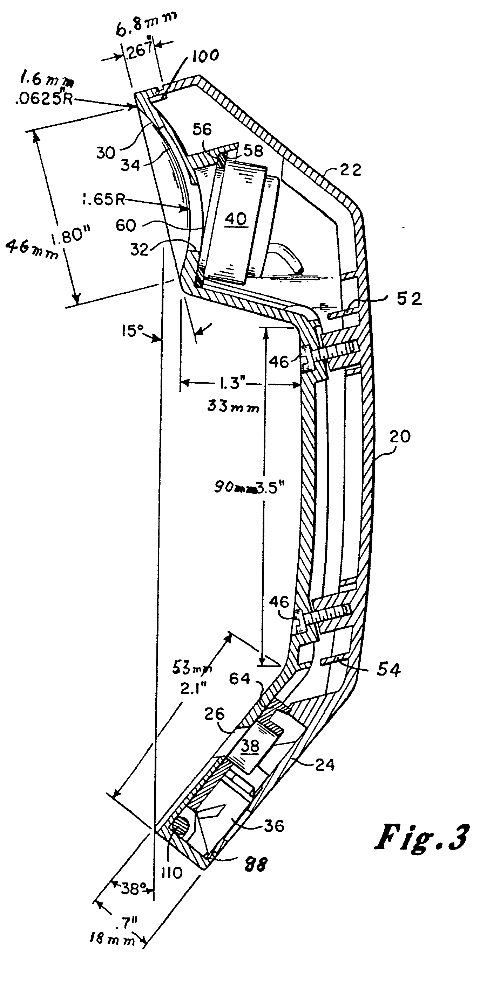

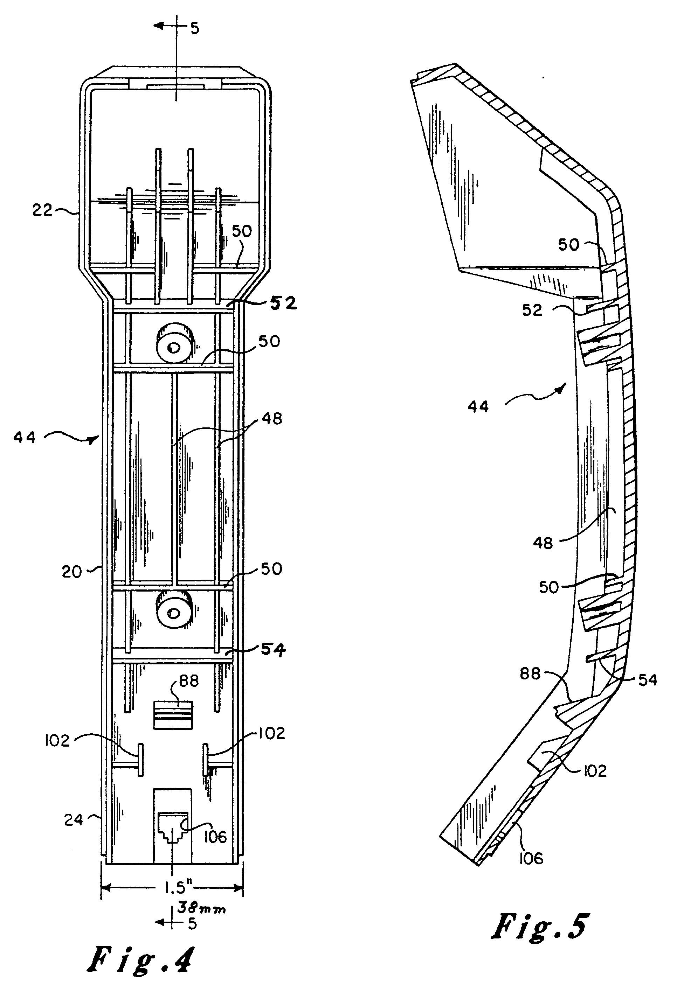

The handle portion is of generally rectangular cross section with rounded edges. It has been determined that the comfort of the handle is directly related to the width of the handle and its depth. In the preferred embodiment, the width is about 1.5" (38 mm) and the depth is about .72" (18 mm) as shown in Figs. 4 and 3 respectively. The handle is curved somewhat between the end portions. The handle shown is curved about a 2.3" (58 mm) radius.

To allow the handle to be gripped by a large hand without interference between the hand and face, the plane of the rim of the speaker depression should be displaced from the handle to provide a clearance of over one inch. As shown in Fig. 3, a clearance of 1.3" (33 mm) is provided.

With the smaller microphone portion extending smoothly from but angled relative to, the handle portion, it has been found that users tend to draw the microphone end of the handle portion closer to the face. Therefore, the angle that the speaker depression 30 makes with the handle portion has been increased from the conventional 13 degrees to 15 degrees as indicated in Fig. 3. An angle of greater than 17 degrees would cause the handle to be placed too close to the user's cheek if a proper seal were maintained between the ear and the speaker.

The angle of the microphone portion relative to the handle is a function of the handle length. With the preferred handle length of about 3.5" (90 mm), an angle of 38 degrees, shown in Fig. 3, has been found to best position the microphone within the voice cone of the largest user population. The distance between the center of the speaker to the center of the microphone should be between 5.5" (140 mm) and 6.0" (152 mm), preferably 5.8" (147 mm). Thus, with increased length, the microphone angle would be increased somewhat. An angle within the range of 35 to 40 degrees is believed best.

It can be seen best from Fig. 3 that the microphone portion extends well beyond the microphone cavity 26. The purpose of that extension is two-fold. First, it provides a convenient space in which to position the connector 36 of the handset and permits that connector to be positioned near the end of the microphone portion. Further, the length of the microphone portion was found important due to ergonomic considerations. Although a very sensitive microphone 38 is used in the handset, and thus need not be positioned directly in front of the user's mouth, the user does not recognize this and attempts to position the microphone directly in front of the mouth. With the extension of the microphone portion to about two inches and with the ribs 28 which extend to the end of the microphone portion, the user has the perception of a microphone positioned directly in front of the mouth even when the microphone is in fact somewhat to the side. Thus, the user does not attempt to angle the handle portion any further in an attempt to speak directly into the microphone.

The acoustic coupling of the speaker 40 to the user's ear for maximum loudness and tone quality is optimized by the dimensions of the speaker depression 30. Rather than the conventional frustoconical depression, the depression 30 is spherical and concave; that is, the depression approximates a portion of a spherical surface. The diameter of the circular rim about the depression 30 is 1.8" (46 mm), somewhat larger than the 1.71" (43 mm) of conventional phones. This larger diameter depression has been found to provide a better seal with a larger user population. The edge of the depression is rounded about a radius of .0625" (1,6 mm) to provide a comfortable and effective acoustic seal between the speaker portion and the user's ear.

The depth of the depression 30 has been determined, through acoustic testing, to provide the loudest speaker output where a spherical depression is used. To allow proper seating of the speaker portion against the ear and to avoid degradation of the sound from the speaker, that depression should be about .267" (6,8 mm) deep.

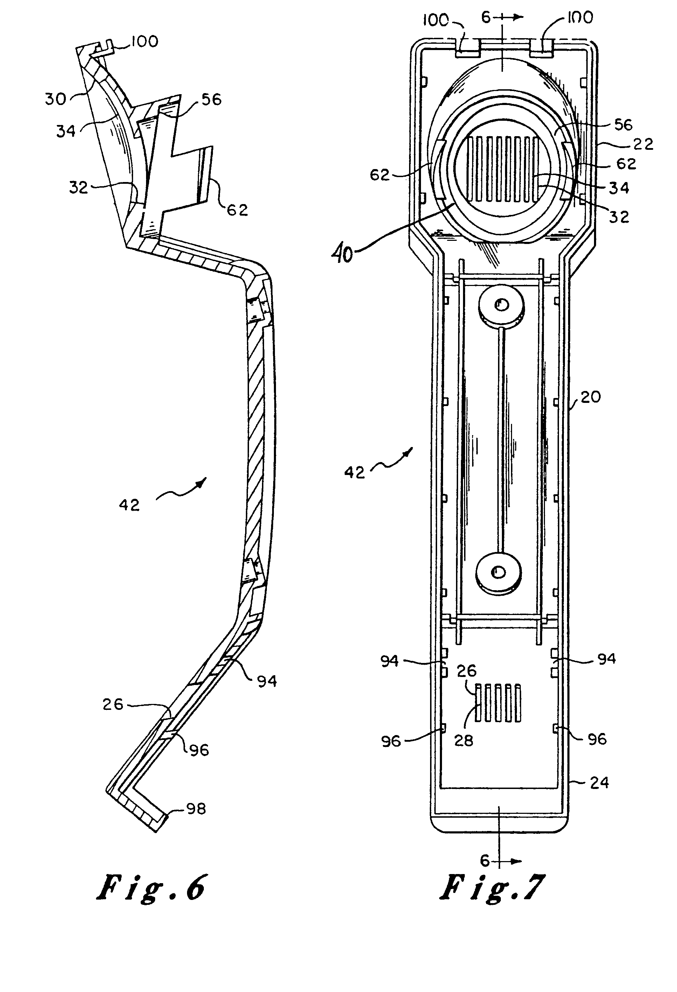

The detailed construction of the telephone handset can be best understood with reference to Figs. 3—10. The housing of the handset is formed of a base section 42 shown in Figs. 6 and 7 and a top portion 44 shown in Figs. 4 and 5. The two are fastened together by screws 46.

As shown in Figs. 4 and 5, the top section includes longitudinal ribs 48 and transverse ribs 50 for structural stiffness. Additionally, transverse baffles 52 and 54 extend from the top section across the hollow of the handle portion. Those baffles serve to acoustically isolate the interior of the speaker portion 22 from the interior of the microphone portion 24 of the handset. That isolation minimizes acoustic feedback from the speaker 40 to the microphone 38.

In the speaker portion of the handset, a seat 56 is provided for the speaker element 40. Due to space requirements, the speaker 40 is not positioned coaxially with the depression 30. However, extensions of the ribs 34 beyond the speaker cavity 32 give the appearance of a coaxial speaker.

As shown in Fig. 3, an acoustic seal ring 58 is provided between the speaker 40 and the annular seat 56. That seal minimizes losses from the speaker by assuring that the sound from the speaker travels through the cavity 32 and not into the interior of the speaker portion 22. The seal also allows for manufacturing dimensional tolerances. The space within the seal 58 is spanned by an acoustically transparent fabric 60 which is adhered to the gasket 58 prior to assembly. The fabric 60 helps keep debris from the speaker 40 and also adds to the aesthetic quality of the handset.

This speaker is retained against the gasket 58 and seat 56 by a pair of spring fingers 62, one of which is shown in Fig. 6. During assembly, the speaker 40 need only be pressed past the fingers 62 against the gasket 58 on the seat 56.

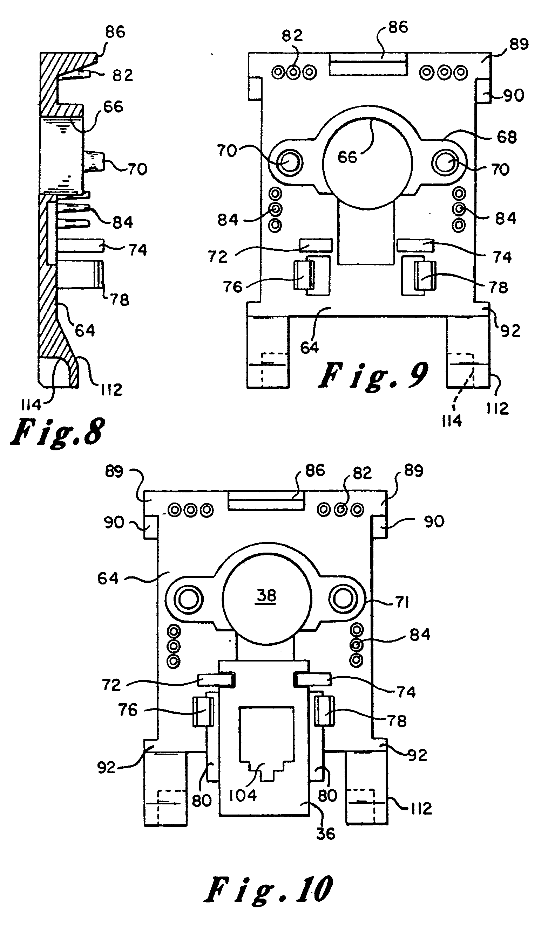

At the opposite end of the handset, a microphone 38 and connector 36 are contained in the microphone portion. The connector has electrical leads to both the microphone 38 and the speaker 40. To ease top and base section molding requirements and facilitate assembly, the microphone and connector are positioned on a molded holder 64 shown enlarged in Figs. 8 and 9. The holder includes a center cavity 66 which receives a microphone. The microphone has elastomeric side tabs 71 (Fig. 10) which conform to the platform 68. Pins 70 are interference fit into holes in the elastomeric tabs to retain the microphone on the holder 64. The connector 36, shown in Fig. 10, is pressed against the holder such that ribs 72 and 74 slide into grooves on opposite sides of the connector 36. As the connector is slid down the ribs 72 and 74 firmly against the holder 64, it is grasped by spring clips 76 and 78 about shoulders 80 of the connector.

The connector 36 is coupled to each of the microphone and the speaker through electrical leads. Two sets of pins 82 and 84 are provided to route and retain those leads to facilitate assembly.

A finger 86 extends away from the holder at one end thereof. That finger is retained by a complementary finger 88 in the top section 44 of the handset when the handset is assembled. Side tabs 89 with inclined shoulders 90 are provided at one end of the holder and additional tabs 92 are provided at the other end of the holder. In assembly, after the microphone and connector have been positioned on the holder and the connecting leads have been routed, the speaker 40 is set in the speaker portion of the base 42 as described above, and the holder is set in the microphone portion. The tabs 89 are dropped into slots 94 formed adjacent to the side walls of the base 42, and the tabs 92 are then dropped beyond the tabs 96. The holder thus rests in its proper position in the base 42.

A cylindrical bar magnet 110 is restrained against the base section 42 by arms 112 which extend from the holder 64. The arms 112 have rounded cutaways 114 for receiving the respective ends of the magnet. The magnet can trigger a magnetically actuated switch which may replace the conventional magnetic hook-switch on the telephone set.

The microphone end of the top section 44 is then slid axially under the lip 98 of the base section 42 and the speaker end of the top section 44 is pressed against the base in order that spring clips 100 engage the top section. The assembly is completed by joining the two sections with the screws 46. The lip 98 provides very secure retention of one end of the top section and, with the uniform width of the microphone portion, allows for ease of alignment of the two sections in that the top section need only be slid in axially over the base section. When the top section is thus seated on the base section, the retaining finger 88 of the top section presses against the finger 86 on the holder 64. Also, two fingers 102 which run axially along either side of the microphone 38 press against the elastomeric tabs 71 on the microphone to firmly retain the microphone against the holder and the holder against the base section. With the connector properly positioned by the holder 64, a raised section 104 is brought into a complementary hole 106 in the top section 44 for suitable electrical connection of the handset.

The configuration discussed above allows the electrical components of the handset, that is the speaker, the connector and the microphone, to be preassembled into two parts joined by electrical leads. The assembly of the connector and microphone to the holder, which make up one part, can be completed without the use of any adhesives or separate fasteners. Thereafter, the two parts can be properly positioned in the base section, again without the use of adhesive or separate fastener.

**Claims**

1. A telephone handset comprising
a hollow elongated housing formed of a top section (44) and a base section 42) having a microphone portion (24), a speaker portion (22) and a central handle portion (20) therebetween, characterized in that:
the base section (42) includes spring fingers (62) for retentively positioning a speaker (40) and further includes a microphone holder (64) upon which is mounted a microphone (38) and a connector (36) and which includes side tabs (89, 92) and, the base portion (42) further includes elements (94, 96) for cooperatively engaging side tabs (89, 92) of the microphone holder (64) so that both the microphone holder (64) and the speaker (40) are retainingly positioned without the use of any chemical or mechanical fastening means within the assembled telephone handset.

2. The telephone handset according to claim 1 further characterized in that:
the face of the speaker portion (22) is angled 15° relative to the central handle portion (20) and the face of the microphone portion (24) is angled 38° relative to the central handle portion (20).

3. The telephone handset according to claim 1 further characterized in that:
the speaker portion (22) includes a spherical concave depression (30).

**Patentansprüche**

1. Fernsprech-Hörer, mit
einem hohlen Gehäuse von überwiegender Längserstreckung, das gebildet ist von einem oberen Teil (44) und einem unteren Teil (42) mit einem Mikrophon-Abschnitt (24), einem Hörer-Abschnitt (22) und einer dazwischen angeordneten mittigen Handhabe (20),
dadurch gekennzeichnet, daß
der untere Teil (42) federnde Finger (62), die als Rückhaltemittel eine Hörerkapsel (40) in Stellung halten, und ferner einen Mikrophon-Halter (64) umfaßt, auf dem ein Mikrophon (38) und ein Verbinder (36) angeordnet sind und der seitliche Ansätze (89, 92) aufweist, und der untere Teil (42) ferner Organe (94, 96) aufweist, die im Zusammenwirken mit den seitlichen Ansätzen (89, 92) des Mikrophon-Halters (64) so in diese eingreifen, daß sowohl der Mikrophon-Halter (64) als auch die Hörerkapsel (40) ohne Verwendung chemischer oder mechanischer Befestigungsmittel innerhalb des zusammengebauten Fernsprech-Hörers unverlierbar in Stellung gehalten sind.

2. Fernsprech-Hörer nach Anspruch 1, ferner dadurch gekennzeichnet, daß die Stirnfläche des Hörer-Abschnitts (22) unter einem Winkel von 15° zur mittigen Handhabe (20) und die Stirnfläche des Mikrophon-Abschnitts (24) unter einem Winkel von 38° zur mittigen Handhabe (20) angeordnet ist.

3. Fernsprech-Hörer nach Anspruch 1, ferner dadurch gekennzeichnet, daß der Hörer-Abschnitt (22) eine sphärische konkave Vertiefung (30) umfaßt.

**Revendications**

1. Combiné téléphonique, comprenant
une carcasse creuse allongée composée d'une partie supérieure (44) et d'une partie inférieure (42) ayant une partie microphone (24), une partie écouteur (22) et une poignée centrale (20) intermédiaire,
caractérisé en ce que
la partie inférieure (42) comprend des doigts (62) faisant ressort qui, servant de moyens de retenue, maintiennent en place un écouteur (40), et comprend en outre un teneur de microphone (64) sur lequel sont montés un microphone (38) et un connecteur (36) et qui comporte des pattes latérales (89, 92), et en ce que la partie inférieure (42) comprend en outre des éléments (94, 96) capable de coopérer avec les pattes latérales (89, 92) du teneur de microphone (64) en s'y engageant de manière qu'aussi bien le teneur de microphone (64) et l'écouteur (40) sont mis en place imperdables dans le combiné téléphonique assemblé, sans utiliser des moyens de fixation chimiques ou mécaniques.

2. Le combiné téléphonique selon la revendication 1, en outre caractérisé en ce que la face de la partie écouteur (22) est disposée sous un angle de 15° par rapport à la poignée centrale (20), et en ce que la face de la partie microphone (24) est disposée sous un angle de 38° par rapport à la poingée centrale (20).

3. Le combiné téléphonique selon la revendication 1, en outre caractérisé en ce que la partie écouteur (22) comprend une dépression concave sphérique (30).

*Fig.1*

*Fig.2*

Fig.3

**Fig.4**

**Fig.5**

*Fig.6*

*Fig.7*

**Fig.8**

**Fig.9**

**Fig.10**

5